# EUROPEAN PATENT SPECIFICATION

(11) **EP 3 664 403 B1**
(45) Date of publication and mention of the grant of the patent: **12.10.2022**
(21) Application number: 18841672.1
(22) Date of filing: 31.07.2018
(51) Int. Cl.: H04L 12/46

(54) **USER AUTHENTICATION OF BRAS UNDER ARCHITECTURE OF MUTUALLY SEPARATED FORWARDING AND CONTROL**
BENUTZERAUTHENTIFIZIERUNG VON BRAS UNTER ARCHITEKTUR EINER VONEINANDER GETRENNTEN WEITERLEITUNG UND STEUERUNG
AUTHENTIFICATION D'UTILISATEUR AU MOYEN D'UN BRAS DANS UNE ARCHITECTURE SÉPARANT TRANSMISSION ET COMMANDE

(30) Priority: 03.08.2017 CN 201710655491
(43) Date of publication of application: 10.06.2020
(73) Proprietor: New H3C Technologies Co., Ltd., Hangzhou, Zhejiang 310052 (CN)
(72) Inventor: MENG, Dan, Beijing 100085 (CN)
(74) Representative: Grünecker Patent- und Rechtsanwälte PartG mbB
(86) International application number: PCT/CN2018/097777
(87) International publication number: WO 2019/024844

(56) References cited:
- CN-A- 101 123 549
- CN-A- 102 055 762
- CN-A- 102 970 227
- CN-A- 102 970 227
- US-A1- 2007 076 607
- US-A1- 2016 142 474
- US-B1- 8 339 959
- HUANG L ET AL: "VxLAN Extension Requirement for Signaling Exchange Between Control and User Plane of vBras; draft-huang-nvo3-vxlan-extension-for-vbras -00.txt", VXLAN EXTENSION REQUIREMENT FOR SIGNALING EXCHANGE BETWEEN CONTROL AND USER PLANE OF VBRAS; DRAFT-HUANG-NVO3-VXLAN-EXTENSION-FOR-VBRAS -00.TXT, INTERNET ENGINEERING TASK FORCE, IETF; STANDARDWORKINGDRAFT, INTERNET SOCIETY (ISOC) 4, RUE DES FALAISES CH, 2 March 2017 (2017-03-02), pages 1-7, XP015118188, [retrieved on 2017-03-02]
- MAINO F ET AL: "Generic Protocol Extension for VXLAN; draft-ietf-nvo3-vxlan-gpe-03.txt", GENERIC PROTOCOL EXTENSION FOR VXLAN; DRAFT-IETF-NVO3-VXLAN-GPE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 25 October 2016 (2016-10-25), pages 1-16, XP015115994, [retrieved on 2016-10-25]

## Description

### BACKGROUND

This disclosure relates to authentication by a broadband remote access server (BRAS) in an architecture in which a forwarding function and a control function are separated from each other.

Based on requirements of centralized control, highly effective forwarding, simple interaction, and flexible extension, the forwarding function and the control function of the BRAS can be separated (hereinafter, referred to as "with forwarding and control separated"), so as to realize a novel metropolitan area network with capabilities of high resource use, dynamically scalable networking, and interface standardization.

In a BRAS architecture with forwarding and control separated, a BRAS Control Plane (CP) device and a BRAS Data Plane (DP) device are mainly included. The BRAS CP device is mainly responsible for processes related to control functions, such as user session management, control packet process, interaction with external service systems such as authentication servers, address pool management and allocation. The BRAS DP device is mainly responsible for processes related to forwarding functions, for example, distinguishing between control packets and data packets, sending control packets to the BRAS CP device, virtual eXtensible LAN (VXLAN) encapsulating and decapsulating, and processes based on user's quality of service (QoS: Quality of Service) policy.

CN 102970227 A discloses a method and device for achieving virtual extensible local area network (VXLAN) message transmitting in an application specific integrated circuit (ASIC). The VXLAN message transmitting is completed through treatment of a VXLAN gateway between a server and an internet protocol (IP) network, the transmitted message comprises uplink message and downlink message, the uplink message is message transmitted from a server side to the IP network, a treatment process comprises analyzing received message and judging whether transmitting treatment is needed or not; obtaining corresponding VXLAN ID of the message needing transmitting; and using the VXLAN ID and a message destination MAC address lookup table to obtain treatment information and transmitting port information of the message, and transmitting the message to be transmitted after packaging treatment. The method and device achieves actions of unicast, multicast and the like of the VXLAN message, and achieves transition from a VLAN transmitting area to a transmitting area based on the VXLAN through logical solidification in the ASIC.

HUANG L ET AL, "VxLAN Extension Requirement for Signaling Exchange Between Control and User Plane of vBras; draft-huang-nvo3-vxlan-extension-for-vbras-00.txt", VXLAN EXTENSION REQUIREMENT FOR SIGNALING EXCHANGE BETWEEN CONTROL AND USER PLANE OF VBRAS; DRAFT-HUANG-NVO3-VXLAN-EXTENSION-FOR-VBRAS-00.TXT, INTERNET ENGINEERING TASK FORCE, IETF; STANDARDWORKINGDRAFT, INTERNET SOCIETY (ISOC) 4, RUE DES FALAISES CH, (20170302), pages 1 - 7, describes the architecture of control plane and user plane separated BRAS and the VxLAN extension requirement for Signaling Exchange between control plane and user plane.

### SUMMARY

It is therefore the object of the present invention to provide an improved authentication method when a BRAS CP device receives a control packet in a BRAS architecture, a corresponding authentication method when a BRAS DP device in the BRAS architecture receives a control packet, as well as a corresponding authentication device applied to a BRAS CP device in a BRAS architecture and a corresponding authentication device applied to a BRAS DP device in a BRAS architecture

This object is solved by the subject matter of the independent claims.

Preferred embodiments are defined by the dependent claims.

### BRIEF DESCRIPTION OF THE DRAWINGS

FIG. 1 is a schematic diagram showing a BRAS architecture with forwarding and control separated.
FIG. 2 is a schematic structural diagram of a control packet, being added with private header to carry port information of a user access port.
FIG. 3 is a schematic flowchart of a method of performing user authentication on a BRAS DP device side provided based on the disclosure.
FIG. 3A is a schematic flow chart of block 302 in the method shown in FIG. 3.
FIG. 3B is a schematic flow chart of creating a VXLAN tunnel and a VSI by a BRAS DP device.
FIG. 4 is a schematic flowchart of a method for performing user authentication on a BRAS CP device side provided in this disclosure.
FIG. 4A is a schematic flow chart of creating a VXLAN tunnel and a VSI by a BRAS CP device.
FIG. 5 is a schematic diagram of an example provided in this disclosure.
FIG. 6 is a schematic structural diagram of a device provided in this disclosure.
FIG. 7 is a schematic hardware structural diagram of the device shown in FIG. 6 provided in this disclosure.
FIG. 8 is a schematic structural diagram of another device provided in this disclosure.

### DETAILED DESCRIPTION OF THE EMBODIMENTS

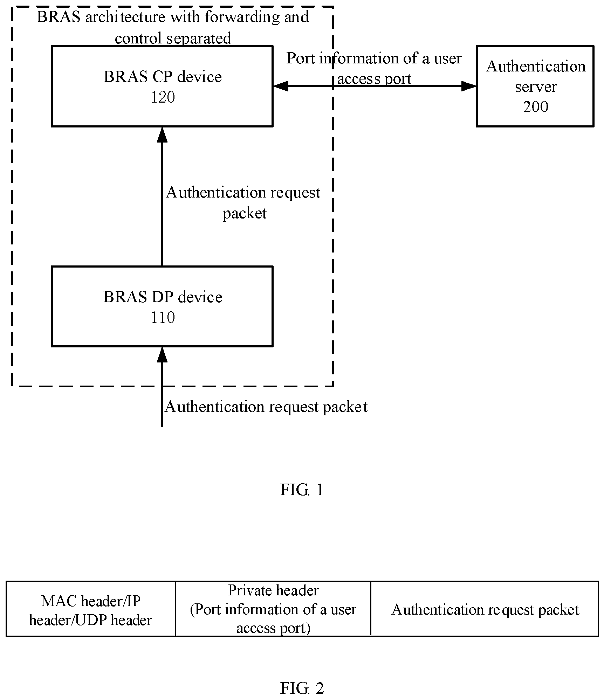

FIG. 1 simply shows a schematic diagram of a BRAS architecture with forwarding and control separated. In a specific application, there may be a plurality of BRAS DP devices and BRAS CP devices in the BRAS architecture with forwarding and control separated. FIG. 1 simply illustrates a BRAS DP device 110 and a BRAS CP device 120 as an example to illustrate how the BRAS DP device 110 and the BRAS CP device 120 interact to complete user authentication.

As shown in FIG. 1, the BRAS DP device 110 receives an authentication request packet from a user equipment, and sends the authentication request packet to the BRAS CP device 120 when identifying the authentication request packet as a control packet. The authentication request packet carries information about user identity, such as a username and password.

The BRAS CP device 120 sends the user identity related information, such as the username and password, carried in the authentication request packet to an authentication server 200. The authentication server 200 compares the received user identity related information with locally pre-configured information relating user identity of the user equipment, and if they are consistent, it is considered that the authentication is successful. Correspondingly, the authentication server 200 returns a control response packet indicating the successful authentication to the BRAS CP device 120. The BRAS CP device 120 returns a control response packet to the BRAS DP device 110. Finally, the control response packet is forwarded by the BRAS DP device 110 to the user equipment. After the authentication is successful, the BRAS CP device 120 sends a user flow table to the BRAS DP device 110. Subsequently, data packets sent by the user equipment may be forwarded by the BRAS DP device 110 based on the received user flow table, without intervention of the BRAS CP device 120.

In the process of user authentication, in addition to authenticating the user identity related information, port information of a port (hereinafter, "user access port") on the BRAS DP device for accessing the user equipment may be often authenticated, so that only a designated user who accesses through a designated port on the BRAS DP device is allowed to go online (indicating "access restriction for a user"). Thus, it may be avoided that a user accesses a network through a non-registered location. However, in the BRAS architecture with forwarding and control separated shown in FIG. 1, the BRAS CP device 120 is responsible for interacting with the authentication server 200; and the port information of the user access port is managed on the BRAS DP device 110, not on the BRAS CP device 120, and is also not carried in the authentication request packet sent by the user equipment. This leads to that the BRAS CP device 120 fails to obtain the port information of the user access port, and then, access restriction for a user cannot be realized.

In order to achieve access restriction for user, in an example, a private header may be added to a control packet sent to the BRAS CP device by the BRAS DP device. FIG. 2 exemplifies a structure of the control packet added with a private header. The private header carries port information of a user access port. Thus, when receiving a control packet, the BRAS CP device may also send the port information of the user access port carried in the private header of the received control packet to the authentication server for authentication, so as to realize access restriction for a user.

However, a private header being used is not standardized, and when a switch chip is used by a BRAS DP device as a key forwarding component, the private header cannot be automatically added or deleted by hardware but processed by a CPU. This will greatly affect processing efficiency, and the going-online speed of a user will drop significantly.

In another example of the present disclosure, another method of access restriction for a user is further provided.

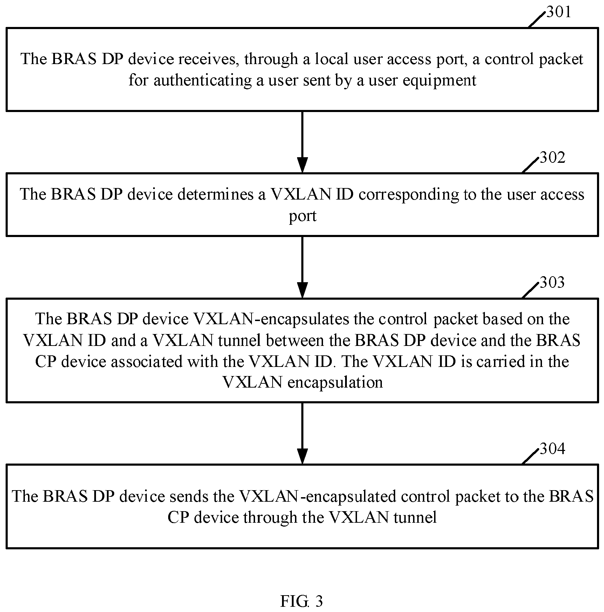

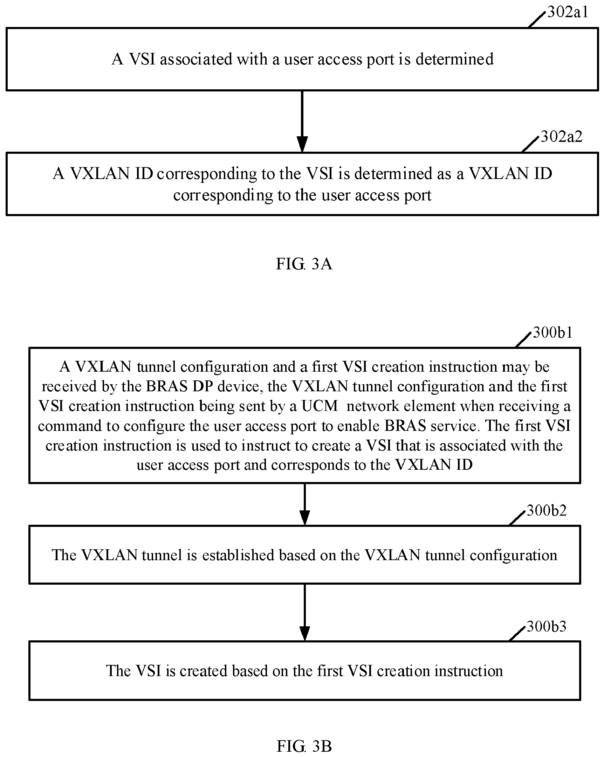

Referring to FIG. 3, FIG. 3 is a flowchart of a method provided by the present disclosure. The flow is applied to a BRAS DP device and includes the following blocks.

Block 301: the BRAS DP device receives, through a local user access port, a control packet for authenticating a user sent by a user equipment.

In the present disclosure, when receiving a packet from a user equipment through a local user access port, the BRAS DP device determines whether the packet is a control packet or a data packet based on a packet type field in the packet. When the packet is determined as a control packet, it means that the packet is used for authentication of a user, and the flow proceeds to block 302. When the packet is determined as a data packet, the packet will be processed based on a data packet forwarding process that is well known to those skilled in the art, which is not specifically limited in this disclosure.

Block 302: the BRAS DP device determines a VXLAN identifier (ID) corresponding to the user access port.

Block 303: the BRAS DP device performs a VXLAN encapsulation on the control packet based on the VXLAN ID and a VXLAN tunnel between the BRAS DP device and the BRAS CP device associated with the VXLAN ID. The VXLAN ID is carried in the VXLAN encapsulation.

Block 304: the BRAS DP device sends the VXLAN-encapsulated control packet to the BRAS CP device through the VXLAN tunnel.

In an example, as shown in FIG. 3A, the BRAS DP device determines the VXLAN ID corresponding to the user access port may include the following blocks 302a1 and 302a2:

Block 302a1: the BRAS DP device determines a virtual switch interface (VSI) associated with a user access port.

In this disclosure, the VSI associated with the user access port is dynamically created by the BRAS DP device, and a VSI has a one-to-one correspondence with a VXLAN ID.

Block 302a2: the BRAS DP device determines a VXLAN ID corresponding to the VSI as a VXLAN ID corresponding to the user access port.

So far, the VXLAN ID corresponding to the user access port can be determined through blocks 302al and 302a2.

In an example, the following blocks as shown in FIG. 3B may also be executed before the process shown in FIG. 3.

Block 300b1: the BRAS DP device receives a VXLAN tunnel configuration and a first VSI creation instruction, the VXLAN tunnel configuration and the first VSI creation instruction being sent by a UCM (User Control Management) network element when receiving a command to configure the user access port to enable BRAS service. The first VSI creation instruction is used to instruct the BRAS DP device to create a VSI that is associated with the user access port and corresponds to the VXLAN ID.

Block 300b2: the BRAS DP device establishes the VXLAN tunnel based on the VXLAN tunnel configuration.

Block 300b3: the BRAS DP device creates the VSI based on the first VSI creation instruction.

The creation of the VSI and the establishment of the VXLAN tunnel may be completed through the blocks 300b1 to 300b3. Although the VXLAN tunnel configuration is sent together with the first VSI creation instruction in block 300b 1 in FIG. 3B, those skilled in the art should understand that the VXLAN tunnel configuration may also be sent separately from the first VSI creation instruction. For example, the VXLAN tunnel configuration is sent first, then the first VSI creation instruction is sent, or the first VSI creation instruction is sent first, and then the VXLAN tunnel configuration is sent.

In application of the example of the present disclosure, one VXLAN tunnel can associate with multiple different VXLAN IDs, but one VXLAN ID is uniquely associated with one VXLAN tunnel. In case that the VXLAN tunnel associated with the VXLAN ID is associated with multiple VXLAN IDs, in the foregoing block 303, when the control packet is VXLAN-encapsulated based on the VXLAN ID and the VXLAN tunnel associated with the VXLAN ID, a VNI field in the VXLAN encapsulation carries the VXLAN ID, a tunnel source address in the VXLAN encapsulation is an IP address of the BRAS DP device, and a tunnel destination address in the VXLAN encapsulation is an IP address of the BRAS CP device.

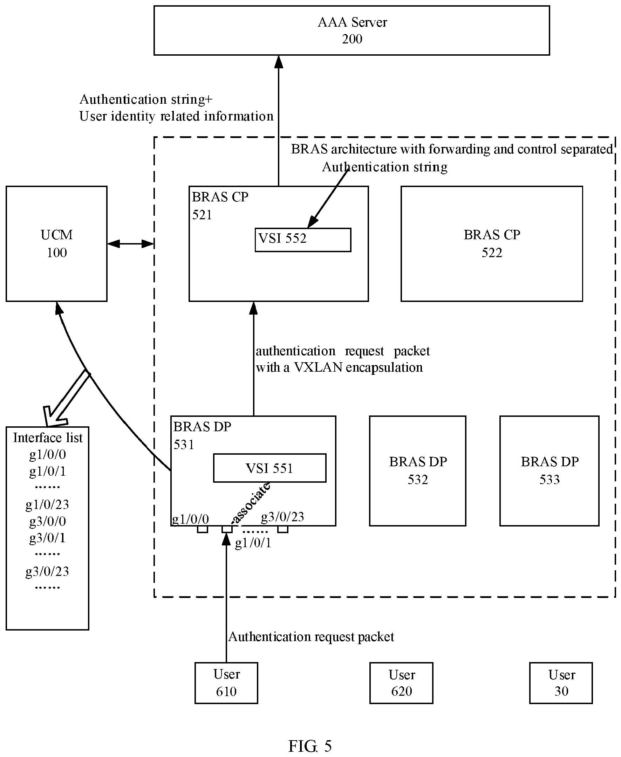

The UCM network element is used to configure and manage the BRAS CP device and the BRAS DP device in the BRAS architecture with forwarding and control separated. For example, the UCM network element may configure and manage the BRAS CP device and the BRAS DP device in the BRAS architecture with forwarding and control separated in a unified user interface (UI). The networking in FIG. 5 is an example of a connection structure of a UCM network element, a BRAS CP device and a BRAS DP device.

So far, the flow shown in Figure 3 is completed.

In an example of the present disclosure, the BRAS DP device may further send the port information of the user access port to the UCM network element, so that the UCM network element sends the port information of the user access port corresponding to the VXLAN ID to the BRAS CP device. The port information of the user access port includes: a subslot number of a subslot where the user access port is located, a slot number to which the sub-slot number belongs, a port number, and a port type. The following describes how the BRAS CP device obtains and sends the port information of the user access port to the authentication server for authentication.

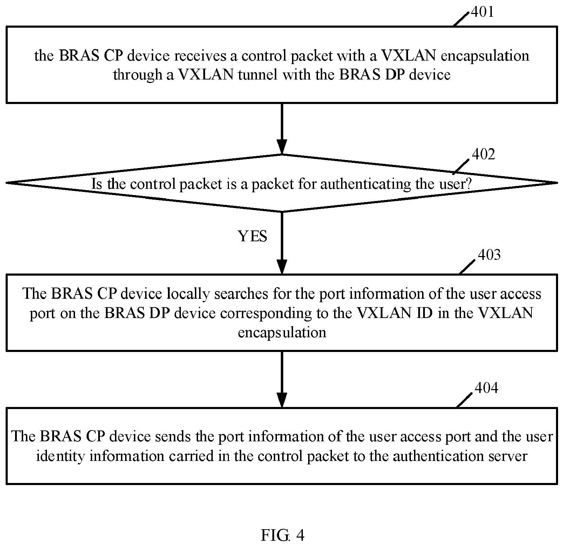

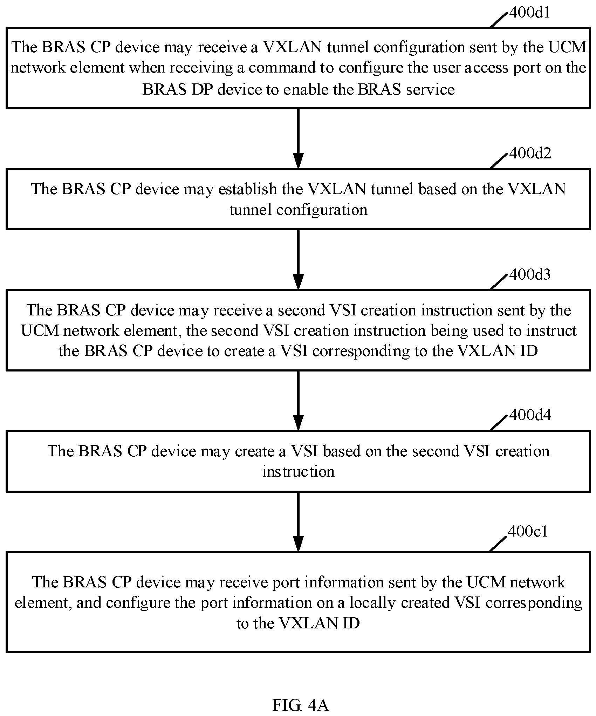

After the BRAS DP device forwards the VXLAN-encapsulated control packet through the VXLAN tunnel, the BRAS CP device that has established the VXLAN tunnel with the BRAS DP device receives the VXLAN encapsulated control packet through the VXLAN tunnel, and executes the process shown in FIG. 4.

Referring to FIG. 4, FIG. 4 is a flowchart of another method provided by the present disclosure, which is applied to a BRAS CP device. As shown in FIG. 4, the process may include the following blocks.

Block 401: the BRAS CP device receives a control packet with a VXLAN encapsulation through a VXLAN tunnel with the BRAS DP device.

Block 402: the BRAS CP device determines whether the control packet is a packet for authenticating the user. If the control packet is determined as a packet for authenticating the user, the flow proceeds to block 403.

In an example, it may be determined whether the control packet is a packet for authenticating the user based on a packet attribute field.

Block 403: the BRAS CP device locally searches for the port information of the user access port on the BRAS DP device corresponding to the VXLAN ID in the VXLAN encapsulation.

Block 404: the BRAS CP device sends the port information of the user access port and the user identity information carried in the control packet to the authentication server for authentication.

The port information here, that is, the port information of the port for accessing the user equipment on the BRAS DP device sent by the BRAS DP device described above, is dynamically configured by the UCM network element on the BRAS CP device. In an example, the foregoing port information may be combined into a character string based on a specified format, which is referred to as an authentication string. The specified format here is a format that is easy for the authentication server to recognize. In an example, the port information includes a subslot number of a subslot where a specified port locates, a slot number to which the subslot number belongs, a port number, and a port type. The authentication string obtained by combining the port information in the specified format can be, for example, the subslot number of the subslot where the user access port locates/the slot number to which the sub-slot number belongs/the port number of the user access port/the port type of the user access port.

Among them, the character "/" represents a connector.

So far, the flow shown in FIG. 4 is completed.

In the process shown in FIG. 4, before the BRAS CP device locally searches for the port information of the user access port on the BRAS DP device corresponding to the VXLAN ID in the VXLAN encapsulation in the above block 403, the following blocks as shown in FIG. 4A may be executed.

Block 400c1: the BRAS CP device may receive port information sent by the UCM network element, and configure the port information on a locally created VSI corresponding to the VXLAN ID.

Based on block 400c1, in block 403, the BRAS CP device locally searches for the port information of the user access port on the BRAS DP device corresponding to the VXLAN ID in the VXLAN encapsulation, including: searching for a VSI corresponding to the VXLAN ID in all local VSIs; determining the port information configured for the found VSI as port information of the user access port corresponding to the VXLAN ID on the BRAS DP device.

In an example of the present disclosure, before the block 400c1, the BRAS CP device may perform the following blocks as shown in FIG. 4A.

Block 400d1: the BRAS CP device may receive a VXLAN tunnel configuration sent by the UCM network element when receiving a command to configure the user access port on the BRAS DP device to enable the BRAS service.

Block 400d2: the BRAS CP device may establish the VXLAN tunnel based on the VXLAN tunnel configuration.

Block 400d3: the BRAS CP device may receive a second VSI creation instruction sent by the UCM network element. The second VSI creation instruction is used to instruct the BRAS CP device to create a VSI corresponding to the VXLAN ID.

Block 400d4: the BRAS CP device may create a VSI based on the second VSI creation instruction.

Through blocks 400d1 to 400d2, it may be achieved that the BRAS CP device creates the VSI corresponding to the VXLAN ID, establishes the VXLAN tunnel between the BRAS CP device and the BRAS DP device, and associates the established VXLAN tunnel and the VXLAN ID. Although in FIG 4A, the VXLAN tunnel configuration is sent first in block 400d1 and then the second VSI creation instruction is sent in block 400d3, those skilled in the art should understand that the second VSI creation instruction may be sent first and then the VXLAN tunnel configuration may be sent, and even the VXLAN tunnel configuration can be sent along with the second VSI creation instruction.

It can be seen from the flow shown in FIG. 3 and FIG. 4 that in the present disclosure, the VXLAN ID implicitly identifies the port information of the user access port on the BRAS DP device, so that the port information of the user access port may be involved in user authentication together with the user identity information. Thus, access restriction for a user can be achieved.

In addition, in the present disclosure, a packet transmitted between the BRAS CP device and the BRAS DP device uses a standard VXLAN encapsulation, and it is not necessary to add a private header to carry port information of the user access port. Thus, the BRAS DP device may use a relatively simple but inexpensive switch chip to achieve an access restriction for a user.

Also, in the present disclosure, the port information of the user access port on the BRAS DP device can be authenticated, and no improvement is required to be made for the authentication server such as the AAA server, which can be implemented relatively simple.

The flows shown in FIG. 3 and FIG. 4 will be described below in conjunction with an example.

Referring to FIG. 5, FIG. 5 is a networking diagram of an application based on an example of the present disclosure. FIG. 5 exemplifies two BRAS CP devices 521, 522. Figure 5 also shows three BRAS DP devices 531, 532, 533.

In FIG. 5, the BRAS DP device 531, the BRAS DP device 532, and the BRAS DP device 533 send the port information of the local user access port to the UCM network element 100 shown in FIG. 5, respectively. FIG. 5 only shows that the BRAS DP device 531 sends the port information for the local user access port to the UCM network element 100.

In FIG. 5, the UCM network element 100 provides a UI, in which there are configuration options for the BRAS CP device 521, the BRAS CP device 522, and configuration options for the BRAS DP device 531, the BRAS DP device 532, and the BRAS DP device 533.

Taking the BRAS DP device 531 as an example, the BRAS DP device 532 and the BRAS DP device 533 are similar, and a user configures the user access port of the BRAS DP device 531 in the configuration option of the BRAS DP device 531 shown in the UI based on the service requirement. If the user configures the user access port g1/0/1 of the BRAS DP device 531 to enable a BRAS service on the UI provided by the UCM network element 100 based on the service requirement, the UCM network element 100 allocates a global VXLAN ID (denoted as VXLAN400) for the BRAS service of the user access port g1/0/1, and selects one of the BRAS CP device 521 and the BRAS CP device 522 for establishing a VXLAN tunnel with the BRAS DP device 531. There are various ways to select a BRAS CP device, such as selecting a device with the lightest load, selecting a device with a most redundant bandwidth, and the like, which is not specifically limited in this example.

If the UCM network element 100 selects the BRAS CP device 521, the UCM network element 100 sends a VXLAN tunnel configuration to the BRAS DP device 531 and the BRAS CP device 521 to establish a VXLAN tunnel between the BRAS DP device 531 and the BRAS CP device 521. The manner of establishing a VXLAN tunnel between the BRAS DP device 531 and the BRAS CP device 521 can be any one of the techniques well known to those skilled in the art, and will not be described herein. The established VXLAN tunnel is associated with the VXLAN ID "VXLAN400". If a VXLAN tunnel has been established between the BRAS DP device 531 and the BRAS CP device 521, the above blocks of selecting the BRAS CP and sending the tunnel configuration may be omitted, and the established VXLAN tunnel may be directly associated with the VXLAN ID "VXLAN400". For convenience of description, the VXLAN tunnel associated with the VXLAN ID "VXLAN400" can be denoted as a VXLAN tunnel "a".

The UCM network element 100 sends a first VSI creation instruction to the BRAS DP device 531. The BRAS DP device 531 receives the first VSI creation instruction, creates a VSI 551 corresponding to the VXLAN ID "VXLAN400" based on the first VSI creation instruction, and associates the created VSI 551 with the user access port g1/0/1. In the application, the VSI 551 of the BRAS DP device 531 uniquely associates with the VXLAN ID "VXLAN400".

The UCM network element 100 sends a second VSI creation instruction to the BRAS CP device 521. The BRAS CP device 521 receives the second VSI creation instruction, and creates a VSI 552 corresponding to the VXLAN ID "VXLAN400". In the application, the VSI 552 of the BRAS CP device 521 is uniquely associated with the VXLAN ID "VXLAN400". In this example, the UCM network element 100 sends the VXLAN tunnel configuration, the first VSI creation instruction, and the second VSI creation instruction not in a fixed chronological order.

The UCM network element 100 finds the port information of the user access port g1/0/1 in the port information of all the user access ports previously sent by the BRAS DP device 531. The port information of the user access port g1/0/1 can include the subslot number of the subslot where the port is located, the slot number to which the subslot number belongs, the port number, and the port type.

The UCM network element 100 arranges the found port information of the user access port g1/0/1 in a specified format to construct an authentication string to accurately associate with a user 610 accessing through the user access port g1/0/1. Suppose the constructed authentication string is: eth 1/0/1.

The UCM network element 100 configures the constructed authentication string in the VSI 552 of the BRAS CP device 521.

The configuration for the BRAS DP device 531 and the BRAS CP device 521 by the UCM network element 100 has been described above.

The user 610 goes online and sends an authentication request packet for requesting authentication. The authentication request packet is a packet for authenticating the user 610, and carries the identity related information of the user 610, such as a username and a password.

The BRAS DP device 531 receives the authentication request packet through the local user access port g1/0/1, and searches for a VSI associated with the local user access port g1/0/1 when identifying the authentication request packet as a control packet.

The BRAS DP device 531 finds that the VSI associated with the local user access port g1/0/1 is the VSI 551, and the VXLAN ID corresponding to the VSI 551 is VXLAN400, and performs a VXLAN encapsulation on the authentication request packet based on the VXLAN ID "VXLAN400" and the VXLAN tunnel "a" associated with the VXLAN ID "VXLAN400", and forwards the VXLAN-encapsulated authentication request packet through the VXLAN tunnel "a". The VXLAN ID "VXLAN400" is carried in the VNI field in the VXLAN encapsulation.

After receiving the VXLAN-encapsulated authentication request packet through the VXLAN tunnel "a", the BRAS CP device 521 searches for the VSI corresponding to the VXLAN ID "VXLAN400" carried in the VNI field of the VXLAN encapsulation from all local VSIs.

The BRAS CP device 521 finds the VSI 552, obtains the authentication string "eth 1/0/1" configured for the VSI 552, and sends the authentication string "eth 1/0/1" and the identity related information of the user 610 carried in the authentication request packet in an agreed format to the authentication server (using the AAA server 200 as an example) for authentication. Specifically, the BRAS CP device 521 generates a new Radius packet, and the authentication string "eth 1/0/1" and the identity related information of the user 610 carried in the authentication request packet are carried in the RADIUS packet in an agreed format to be sent to the AAA server. 200.

The AAA server 200 authenticates the received authentication string "eth 1/0/1" and the identity related information of the user 610. The specific authentication process may refer to any authentication technology well known to those skilled in the art, and details are not described herein.

It can be seen that, in this example, the port information of the user access port on the BRAS DP device is implicitly identified by the VXLAN ID, and when the BRAS DP device transmits the control packet to the BRAS CP device, the VXLAN ID is carried in the control packet, which indirectly achieves that the port information of the user access port on the BRAS DP device is carried in the control packet. Thus, the port information of the user access port can also be involved in the user authentication, which achieves an accurate authentication for a user.

In addition, a packet communicated between the BRAS CP device and the BRAS DP device uses a standard VXLAN encapsulation. Therefore, it is not necessary to add an additional private header to carry authentication information for access restriction for a user, such as association information of a user access port. In this way, the BRAS DP device can use a relatively simple but inexpensive switch chip to achieve access restriction for a user.

Also, in this example, an authentication server may authenticate port information of a user access port, and it is not necessary to perform any improvement on an authentication server such as AAA server, and therefore, the implementation is relatively simple.

The method provided by the present disclosure has been described above. The device provided by the present disclosure is described below:

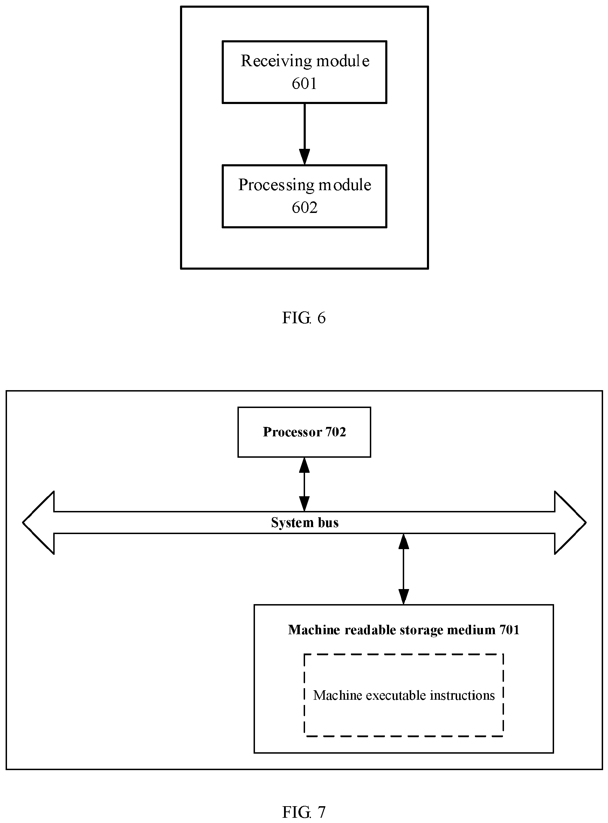

Referring to FIG. 6, FIG. 6 is a functional structural diagram of an authentication device provided by the present disclosure. The device is applied to a BRAS CP device in the BRAS architecture with forwarding and control separated, including:

a receiving module 601 is configured to receive a control packet with a VXLAN encapsulation through a VXLAN tunnel with the BRAS DP device in the BRAS architecture;

a processing module 602 is configured to: when the control packet is determined as a packet used for authenticating a user, search, on the BRAS CP device, for port information of a user access port corresponding to a VXLAN ID in the VXLAN encapsulation, wherein, the user access port locates on the BRAS DP device; and send the port information and identity information of the user carried in the control packet to an authentication server for authentication.

In an example, the processing module 602 is further configured to: receive the port information sent by a UCM network element, configure the port information on a VSI corresponding to the VXLAN ID created by the BRAS CP device. In this case, the processing module 602 searches for the port information of the user access port corresponding to the VXLAN ID on the BRAS CP device includes: searching for a VSI corresponding to the VXLAN ID from all VSIs on the BRAS CP device; determining port information configured for the found VSI as the port information of the user access port corresponding to the VXLAN ID.

In an example, the receiving module 601 further receives a VXLAN tunnel configuration sent by the UCM network element when receiving a command to configure the user access port on the BRAS DP device to enable a BRAS service, and a second VSI creation instruction used to create a VSI corresponding to the VXLAN ID sent by the UCM network element. Correspondingly, the processing module 602 establishes the VXLAN tunnel based on the VXLAN tunnel configuration; and creates the VSI based on the second VSI creation instruction.

In an example, the port information of the user access port includes: a subslot number of a subslot where the user access port is located, a slot number to which the subslot number belongs, a port number of the user access port, and a type of the user access port.

So far, the structural description of the device shown in Fig. 6 is completed.

Correspondingly, the present disclosure also provides a hardware structural diagram corresponding to the device shown in FIG. 6. As shown in FIG. 7, the device may include a machine readable storage medium 701, a processor 702; a machine readable storage medium 701 and a processor 702 can communicate via a system bus. The machine readable storage medium 701 is configured to store the machine executable instructions corresponding to the operations performed by the receiving module 601 and the processing module 602; and the processor 702 is configured to load and execute the machine executable instructions to implement the foregoing authentication method.

In an example, the machine-readable storage medium 701 can be any electronic, magnetic, optical, or other physical storage device that can contain or store information, such as executable instructions, data, and the like. For example, a machine-readable storage medium can be a volatile memory, a non-volatile memory, or similar storage medium. Specifically, the machine-readable storage medium 410 may be a RAM (Radom Access Memory), a flash memory, a storage drive (such as a hard disk drive), a solid state drive, any type of storage disk (such as a compact disc, a DVD, etc.) or the combination thereof.

So far, description for the hardware structure shown in FIG. 7 is completed.

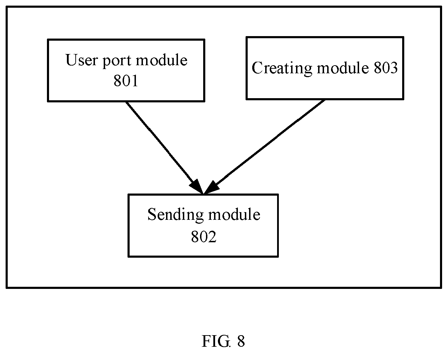

Referring to FIG. 8, FIG. 8 is a structural diagram of another device provided by the present disclosure. As shown in Figure 8, the device is applied to the BRAS DP device in the BRAS architecture with forwarding and control separated, including:

a user port module 801, configured to receive a control packet through a user access port on the BRAS DP device, wherein, the control packet is used to authenticate a user and is sent by a user equipment, and configured to determine a VXLAN ID corresponding to the user access port;

a sending module 802 is configured to perform a VXLAN encapsulation on the control packet based on the VXLAN ID and a VXLAN tunnel associated with the VXLAN ID, and send the VXLAN-encapsulated control packet through the VXLAN tunnel to a BRAS CP device on an opposite end of the VXLAN tunnel. The VXLAN ID is carried in the VXLAN encapsulation, so that the BRAS CP device locally searches for the port information of the user access port corresponding to the VXLAN ID, and sends the port information and the identity information of the user carried in the control packet to the authentication server for authentication.

In an example, when determining the VXLAN ID corresponding to the user access port, the user port module 801 is specifically configured to: determine a virtual switch interface (VSI) associated with the user access port; and determine a VXLAN ID corresponding to the VSI as the VXLAN ID corresponding to the user access port.

In an example, as shown in FIG. 8, the device further includes a creating module 803. The creating module 803 is configured to receive a VXLAN tunnel configuration and a first VSI creation instruction, wherein, the VXLAN tunnel configuration and the first VSI creation instruction are sent by a user control management (UCM) network element when receiving a command for configuring the user access port to enable a BRAS service, and wherein, the first VSI creation instruction is used to create a VSI that is associated with the user access port and corresponds to the VXLAN ID; establish the VXLAN tunnel based on the VXLAN tunnel configuration; create the VSI based on the first VSI creation instruction.

In an example, the sending module 802 further sends the port information of the user access port to the UCM network element, so that the UCM network element sends the port information of the user access port corresponding to the VXLAN ID to the BRAS CP device. The port information of the user access port includes: a subslot number of a subslot where the user access port is located, a slot number to which the subslot number belongs, a port number of the user access port, and a type of the user access port.

So far, the structural description of the device shown in Fig. 8 is completed.

Correspondingly, the present disclosure also provides a hardware structural diagram corresponding to the device shown in FIG. 8. The hardware structure may include: a machine readable storage medium, a processor, and the specific structure is similar to the hardware structure diagram shown in FIG. 7. The machine readable storage medium and the processor can communicate via a system bus. The machine readable storage medium is configured to store machine executable instructions corresponding to the operations performed by the above-mentioned user port module, sending module, and creating module; and the processor is configured to load and execute the machine executable instructions to implement the above authentication method.

In an example, the machine readable storage medium can be any electronic, magnetic, optical, or other physical storage device that can contain or store information such as executable instructions, data, and so forth. For example, the machine readable storage medium can be a volatile memory, a non-volatile memory, or similar storage medium. Specifically, the machine readable storage medium 410 may be a RAM (Radom Access Memory), a flash memory, a storage drive (such as a hard disk drive), a solid state drive, any type of storage disk (such as a compact disc, a DVD, etc.) or the combination thereof.

## Claims

1. An authentication method, comprising:
receiving (401), by a broadband remote access server, BRAS, control plane, CP, device (120) in a BRAS architecture with data forwarding and control separated, a control packet with a VXLAN encapsulation through a VXLAN tunnel between the BRAS CP device and a BRAS data plane, DP, device in the BRAS architecture;
searching (403), by the BRAS CP device, for port information of a user access port corresponding to a VXLAN ID in the VXLAN encapsulation locally when the control packet is a packet for authenticating a user, wherein the user access port resides on the BRAS DP device (110);
sending (404), by the BRAS CP device, the port information and identity information of the user carried in the control packet to an authentication server (200) for authentication;
receiving, by the BRAS CP device (120), the port information sent by a user control management, UCM, network element; and
configuring, by the BRAS CP device, the port information on a locally created virtual switch interface, VSI, corresponding to the VXLAN ID.

2. The method of claim 1, wherein, searching for the port information of the user access port corresponding to the VXLAN ID locally, comprises:
searching, by the BRAS CP device (120), for a VSI corresponding to the VXLAN ID from all local VSIs;
determining, by the BRAS CP device, port information configured for the found VSI as the port information of the user access port corresponding to the VXLAN ID.

3. The method of claim 1, wherein, the method further comprises:
receiving (400d1), by the BRAS CP device (120), a VXLAN tunnel configuration, wherein the VXLAN tunnel configuration is sent by the UCM network element when receiving a command for configuring the user access port on the BRAS DP device (110) to enable a BRAS service,
establishing (400d2), by the BRAS CP device, the VXLAN tunnel based on the VXLAN tunnel configuration;
receiving (400d3), by the BRAS CP device, a second VSI creation instruction sent by the UCM network element, wherein, the second VSI creation instruction is used to instruct the BRAS CP device to create a VSI corresponding to the VXLAN ID,
creating (400d4), by the BRAS CP device, a VSI corresponding to the VXLAN ID locally based on the second VSI creation instruction.

4. The method of claim 1, wherein, the port information comprises:
a subslot number of a subslot where the user access port is located,
a slot number to which the subslot number belongs.
a port number of the user access port,
a type of the user access port.

5. An authentication method, comprising:
receiving (301), by a broadband remote access server, BRAS, data plane, DP, device (110) in the BRAS architecture with data forwarding and control separated, a control packet through a local user access port, wherein, the control packet is used to authenticate a user and is sent by a user equipment;
determining (302), by the BRAS DP device, a VXLAN ID corresponding to the user access port;
performing (303), by the BRAS DP device, a VXLAN encapsulation on the control packet based on the VXLAN ID and a VXLAN tunnel associated with the VXLAN ID, wherein, the VXLAN ID is carried in the VXLAN encapsulation;
sending (304), by the BRAS DP device, the VXLAN-encapsulated control packet through the VXLAN tunnel to a BRAS control plane, CP, device on an opposite end of the VXLAN tunnel,
wherein determining the VXLAN ID corresponding to the user access port comprises:
determining (302a1), by the BRAS DP device (110), a virtual switch interface, VSI, associated with the user access port;
determining (302a2), by the BRAS DP device, a VXLAN ID corresponding to the VSI as the VXLAN ID corresponding to the user access port.

6. The method of claim 5, wherein, the method further comprises:
receiving (300b1), by the BRAS DP device (110), a VXLAN tunnel configuration and a first VSI creation instruction, wherein, the VXLAN tunnel configuration and the first VSI creation instruction are sent by a user control management, UCM, network element when receiving a command for configuring the user access port to enable a BRAS service, and wherein, the first VSI creation instruction is used to instruct the BRAS DP device to create a VSI that is associated with the user access port and corresponds to the VXLAN ID;
establishing (300b2), by the BRAS DP device, the VXLAN tunnel based on the VXLAN tunnel configuration;
creating (300b3), by the BRAS DP device, the VSI based on the first VSI creation instruction.

7. The method of claim 5, wherein, the method further comprises:
sending, by the BRAS DP device (110), the port information of the user access port to a user control management, UCM, network element, so that the UCM network element sends the port information of the user access port corresponding to the VXLAN ID to the BRAS CP device (120).

8. The method of claim 7, wherein the port information of the user access port comprises:
a subslot number of a subslot where the user access port is located,
a slot number to which the subslot number belongs,
a port number of the user access port,
a type of the user access port.

9. An authentication device, which is applied to a broadband remote access server, BRAS, control plane, CP, device (120) in a BRAS architecture with data forwarding and control separated, comprising:
a receiving module (601), configured to receive (401) a control packet with a VXLAN encapsulation through a VXLAN tunnel with the BRAS data plane, DP, device in the BRAS architecture;
a processing module (602), configured to: when the control packet is determined as a packet used for authenticating a user,
search (403), on the BRAS CP device, for port information of a user access port corresponding to a VXLAN ID in the VXLAN encapsulation, wherein, the user access port resides on the BRAS DP device;
send (404) the port information and identity information of the user carried in the control packet to an authentication server for authentication,
wherein the processing module (602) is further configured to:
receive the port information sent by a user control management, UCM, network element,
configure the port information on a virtual switch interface, VSI, corresponding to the VXLAN ID created by the BRAS CP device.

10. The device based on claim 9, wherein, the processing module (602) is configured to search, on the BRAS CP device (120), for the port information corresponding to the VXLAN ID, by:
searching for a VSI corresponding to the VXLAN ID from all VSIs on the BRAS CP device; determining port information configured for the found VSI as the port information corresponding to the VXLAN ID.

11. An authentication device, which is applied to a broadband remote access server, BRAS, data plane, DP, device (110) in a BRAS architecture with data forwarding and control separated, comprising:
a user port module (801), configured to receive (301) a control packet through a user access port on the BRAS DP device, wherein, the control packet is used to authenticate a user and is sent by a user equipment, and configured to determine (302) a VXLAN ID corresponding to the user access port;
a sending module (802), configured to perform (303) a VXLAN encapsulation on the control packet based on the VXLAN ID and a VXLAN tunnel associated with the VXLAN ID, and send (304) the VXLAN-encapsulated control packet through the VXLAN tunnel to a BRAS control plane, CP, device on an opposite end of the VXLAN tunnel, wherein the VXLAN ID is carried in the VXLAN encapsulation,
wherein the user port module (801) is further configured to, by the BRAS DP device (110), determine a virtual switch interface, VSI, associated with the user access port and determine a VXLAN ID corresponding to the VSI as the VXLAN ID corresponding to the user access port.

12. The device of claim 11, wherein the device further comprises a creating module (803), the creating module is configured to:
receive (300b1) a VXLAN tunnel configuration and a first VSI creation instruction, wherein, the VXLAN tunnel configuration and the first VSI creation instruction are sent by a user control management, UCM, network element when receiving a command for configuring the user access port to enable a BRAS service, and wherein, the first VSI creation instruction is used to instruct the BRAS DP device to create a VSI that is associated with the user access port and corresponds to the VXLAN ID;
establish (300b2) the VXLAN tunnel based on the VXLAN tunnel configuration;
create (300b3) the VSI based on the first VSI creation instruction.

## Patentansprüche

1. Authentifizierungsverfahren, das umfasst:
Empfangen (401) eines Steuerpaketes mit einer VXLAN-Kapselung, durch eine BRAS-CP-Vorrichtung (120) (broadband access server control plane device) in einer BRAS-Architektur, bei der Daten-Weiterleitung und Steuerung getrennt sind, über einen VXLAN-Tunnel zwischen der BRAS-CP-Vorrichtung und einer BRAS-DP-Vorrichtung (BRAS data plane device) in der BRAS-Architektur;
lokales Suchen (403) nach Port-Informationen eines Benutzer-Zugangsports, der einer VXLAN-ID in der VXLAN-Kapselung entspricht, durch die BRAS-CP-Vorrichtung, wenn das Steuerpaket ein Paket zum Authentifizieren eines Benutzers ist, wobei der Benutzer-Zugangsport an der BRAS-DP-Vorrichtung (110) resident ist;
Senden (404) der Port-Informationen und von Identitäts-Informationen des Benutzers, die in dem Steuerpaket transportiert werden, durch die BRAS-CP-Vorrichtung zu einem Authentifizierungs-Server (200) zur Authentifizierung;
Empfangen der von einem UCM-Netzwerkelement (user control management network element) gesendeten Port-Informationen durch die BRAS CP-Vorrichtung (120); sowie Konfigurieren der Port-Informationen an einer lokal erstellten VSI (virtual switch interface), die der VXLAN-ID entspricht, durch die BRAS-CP-Vorrichtung.

2. Verfahren nach Anspruch 1, wobei lokales Suchen nach den Port-Informationen des Benutzer-Zugangsports, der der VXLAN-ID entspricht, umfasst:
Suchen nach einer der VXLAN-ID entsprechenden VSI, durch die BRAS-CP-Vorrichtung (120) unter allen lokalen VSI;
Bestimmen für die gefundene VSI konfigurierter Port-Informationen als die Port-Informationen des der VXLAN-ID entsprechenden Benutzer-Zugangsports durch die BRAS-CP-Vorrichtung.

3. Verfahren nach Anspruch 1, wobei das Verfahren des Weiteren umfasst:
Empfangen (400d1) einer VXLAN-Tunnelkonfiguration durch die BRAS-CP-Vorrichtung (120), wobei die VXLAN-Tunnelkonfiguration durch das UCM-Netzwerkelement gesendet wird, wenn ein Befehl zum Konfigurieren des Benutzer-Zugangsports an der BRAS-DP-Vorrichtung (110) empfangen wird, um einen BRAS-Dienst zu aktivieren,
Einrichten (400d2) des VXLAN-Tunnels durch die BRAS-CP-Vorrichtung auf Basis der VXLAN-Tunnelkonfiguration;
Empfangen (400d3) einer zweiten Anweisung zum Erstellen einer VSI, die von dem UCM-Netzwerkelement gesendet wird, durch die BRAS-CP-Vorrichtung, wobei die zweite Anweisung zum Erstellen einer VSI dazu dient, die BRAS-CP-Vorrichtung anzuweisen, eine VSI zu erzeugen, die der VXLAN-ID entspricht,
lokales Erstellen (400d4) einer der VXLAN-ID entsprechenden VSI durch die BRAS-CP-Vorrichtung auf Basis der zweiten Anweisung zum Erstellen einer VSI.

4. Verfahren nach Anspruch 1, wobei die Port-Informationen umfassen:
eine Subslot-Nummer eines Subslots, in dem sich der Benutzer-Zugangsport befindet,
eine Slot-Nummer, zu der die Subslot-Nummer gehört,
eine Port-Nummer des Benutzer-Zugangsports,
einen Typ des Benutzer-Zugangsports.

5. Authentifizierungsverfahren, das umfasst:
Empfangen (301) eines Steuerpaketes durch eine BRAS-DP-Vorrichtung (110) (broadband access server data plane device) in der BRAS-Architektur, bei der Daten-Weiterleitung und Steuerung getrennt sind, über einen lokalen Benutzer-Zugangsport, wobei das Steuerpaket zum Authentifizieren eines Benutzers dient und von einem Endgerät gesendet wird;
Bestimmen (302) einer dem Benutzer-Zugangsport entsprechenden VXLAN-ID durch die BRAS-DP-Vorrichtung;
Durchführen (303), einer VXLAN-Kapselung an dem Steuerpaket auf Basis der VXLAN-ID und eines mit der VXLAN-ID verknüpften VXLAN-Tunnel durch die BRAS-DP-Vorrichtung, wobei die VXLAN-ID in der VXLAN-Kapselung transportiert wird;
Senden (304) des VXLAN-gekapselten Steuerpaketes über den VXLAN-Tunnel zu einer BRAS-CP-Vorrichtung (broadband access server control plane device) an einem gegenüberliegenden Ende des VXLAN-Tunnels durch die BRAS-DP-Vorrichtung,
wobei Bestimmen der dem Benutzer-Zugangsport entsprechenden VXLAN-ID umfasst:
Bestimmen (302a1) einer mit dem Benutzer-Zugangsport verknüpften VSI (virtual switch interface) durch die BRAS-DP-Vorrichtung (110);
Bestimmen (302a2) einer der VSI entsprechenden VXLAN-ID durch die BRAS-DP-Vorrichtung, wenn die VXLAN-ID dem Benutzer-Zugangsport entspricht.

6. Verfahren nach Anspruch 5, wobei das Verfahren des Weiteren umfasst:
Empfangen (300b1) einer VXLAN-Tunnelkonfiguration und einer ersten Anweisung zur Erstellung einer VSI durch die BRAS-DP-Vorrichtung (110), wobei die VXLAN-Tunnelkonfiguration und die erste Anweisung zur Erstellung einer VSI von einem UCM-Netzwerkelement (user control management network element) gesendet werden, wenn ein Befehl zum Konfigurieren des Benutzer-Zugangsports empfangen wird, um einen BRAS-Dienst zu aktivieren, und wobei die erste Anweisung zur Erstellung einer VSI dazu dient, die BRAS-DP-Vorrichtung anzuweisen, eine VSI zu erstellen, die mit dem Benutzer-Zugangsport verknüpft ist und der VXLAN-ID entspricht;
Einrichten (300b2) des VXLAN-Tunnels auf Basis der VXLAN-Tunnelkonfiguration durch die BRAS-DP-Vorrichtung;
Erstellen (300b3) der VSI durch die BRAS-DP-Vorrichtung auf Basis der ersten Anweisung zur Erstellung einer VSI.

7. Verfahren nach Anspruch 5, wobei das Verfahren des Weiteren umfasst:
Senden der Port-Informationen des Benutzer-Zugangsports durch die BRAS-DP-Vorrichtung (110) zu einem UCM-Netzwerkelement (user control management network element), so dass das UCM-Netzwerkelement die Port-Informationen des Benutzer-Zugangsports, der der VXLAN-ID entspricht, zu der BRAS-CP-Vorrichtung (120) sendet.

8. Verfahren nach Anspruch 7, wobei die Port-Informationen des Benutzer-Zugangsports umfassen:
eine Subslot-Nummer eines Subslots, in dem sich der Benutzer-Zugangsport befindet,
eine Slot-Nummer, zu der die Subslot-Nummer gehört,
eine Port-Nummer des Benutzer-Zugangsports,
einen Typ des Benutzer-Zugangsports.

9. Authentifizierungsvorrichtung, die bei einer BRAS-CP-Vorrichtung (120) (broadband access server control plane device) in einer BRAS-Architektur eingesetzt wird, bei der Daten-Weiterleitung und Steuerung getrennt sind, wobei sie umfasst:
ein Empfangs-Modul (601), das zum Empfangen (401) eines Steuerpaketes mit einer VXLAN-Kapselung über einen VXLAN-Tunnel mit der BRAS-DP-Vorrichtung (BRAS data plane device) in der BRAS-Architektur konfiguriert ist;
ein Verarbeitungs-Modul (602), das, wenn das Steuerpaket als ein zum Authentifizieren eines Benutzers dienendes Paket identifiziert wird, konfiguriert ist zum:
Suchen (403) nach Port-Informationen eines Benutzer-Zugangsports, der einer VXLAN-ID in der VXLAN-Kapselung entspricht, an der BRAS CP-Vorrichtung, wobei der Benutzer-Zugangsport an der BRAS-DP-Vorrichtung resident ist;
Senden (404) der Port-Informationen und von Identitäts-Informationen des Benutzers, die in dem Steuerpaket transportiert werden, zu einem Authentifizierung-Server zur Authentifizierung,
wobei das Verarbeitungs-Modul (602) des Weiteren konfiguriert ist zum:
Empfangen der von einem UCM-Netzwerkelement (user control management network element) gesendeten Port-Informationen,
Konfigurieren der Port-Informationen an einer durch die BRAS-CP-Vorrichtung erstellten VSI (virtual switch interface), die der VXLAN-ID entspricht.

10. Vorrichtung nach Anspruch 9, wobei das Verarbeitungs-Modul (602) konfiguriert ist zum:
Suchen nach den der VXLAN-ID entsprechenden Port-Informationen an der BRAS-CP-Vorrichtung (120) durch:
Suchen nach einer der VXLAN-ID entsprechenden VSI unter allen VSI an der BRAS-CP-Vorrichtung;
Bestimmen für die gefundene VSI konfigurierter Port-Informationen als die der VXLAN-ID entsprechenden Port-Informationen.

11. Authentifizierungsvorrichtung, die bei einer BRAS-DP-Vorrichtung (110) (broadband access server control plane device) in einer BRAS-Architektur eingesetzt wird, bei der Daten-Weiterleitung und Steuerung getrennt sind, wobei sie umfasst:
ein Benutzerport-Modul (801), das zum Empfangen (301) eines Steuerpaketes über einen Benutzer-Zugangsport an der BRAS-DP-Vorrichtung konfiguriert ist, wobei das Steuerpaket zum Authentifizieren eines Benutzers dient, von einem Endgerät gesendet wird und zum Bestimmen (302) einer dem Benutzer-Zugangsport entsprechenden VXLAN-ID konfiguriert ist;
ein Sende-Modul (802), das konfiguriert ist zum Durchführen (303) einer VXLAN-Kapselung an dem Steuerpaket auf Basis der VXLAN-ID und eines mit der VXLAN-ID verknüpften VXLAN-Tunnels sowie zum Senden (304) des VXLAN-gekapselten Steuerpaketes über den VXLAN-Tunnel zu einer BRAS-CP-Vorrichtung (BRAS control plane device) an einem gegenüberliegenden Ende des VXLAN-Tunnels, wobei die VXLAN-ID in der VXLAN-Kapselung transportiert wird,
wobei das Benutzerport-Modul (801) des Weiteren konfiguriert ist zum Bestimmen einer mit dem Benutzer-Zugangsport verknüpften VSI (virtual switch interface) sowie zum Bestimmen einer der VSI entsprechenden VXLAN ID als die dem Benutzer-Zugangsport entsprechende VXLAN ID.

12. Vorrichtung nach Anspruch 11, wobei die Vorrichtung des Weiteren ein Erstellungs-Modul (803) umfasst und das Erstellung-Modul konfiguriert ist zum:
Empfangen (300b1) einer VXLAN-Tunnelkonfiguration und einer ersten Anweisung zur Erstellung einer VSI, wobei die VXLAN-Tunnelkonfiguration und die erste Anweisung zur Erstellung einer VSI von einem UCM-Netzwerkelement (user control management network element) gesendet werden, wenn ein Befehl zum Konfigurieren des Benutzer-Zugangsports empfangen wird, um einen BRAS-Dienst zu aktivieren, und wobei die erste Anweisung zur Erstellung einer VSI dazu dient, die BRAS-DP-Vorrichtung anzuweisen, eine VSI zu erstellen, die mit dem Benutzer-Zugangsport verknüpft ist und der VXLAN-ID entspricht;
Einrichten (300b2) des VXLAN-Tunnels auf Basis der VXLAN-Tunnelkonfiguration;
Erstellen (300b3) der VSI auf Basis der ersten Anweisung zum Erstellen einer VSI.

## Revendications

1. Procédé d'authentification, comprenant :
la réception (401), par un dispositif (120) de plan de contrôle, CP - Control Plane, d'un serveur haut débit à accès distant, BRAS - Broadband Remote Access Server, dans une architecture BRAS avec des transfert et contrôle de données séparés, d'un paquet de contrôle avec une encapsulation VXLAN via un tunnel VXLAN entre le dispositif CP BRAS et un dispositif de plan de données, DP - Data Plane, BRAS dans l'architecture BRAS ;
la recherche (403), par le dispositif CP BRAS, d'information de port d'un port d'accès utilisateur correspondant à un identifiant, ID, de VXLAN, dans l'encapsulation VXLAN localement quand le paquet de contrôle est un paquet pour l'authentification d'un utilisateur, dans lequel le port d'accès utilisateur réside sur le dispositif DP BRAS (110) ;
l'envoi (404), par le dispositif CP BRAS, de l'information de port et d'information d'identité de l'utilisateur transportées dans le paquet de contrôle à un serveur d'authentification (200) pour l'authentification ;
la réception, par le dispositif CP BRAS (120), de l'information de port envoyée par un élément de réseau de gestion de contrôle d'utilisateur, UCM - User Control Management ; et
la configuration, par le dispositif CP BRAS, de l'information de port sur une interface de commutation virtuelle, VSI - Virtual Switch Interface, créée localement, correspondant à l'ID de VXLAN.

2. Procédé selon la revendication 1, dans lequel la recherche de l'information de port du port d'accès utilisateur correspondant localement à l'ID de VXLAN comprend :
la recherche, par le dispositif CP BRAS (120), d'une VSI correspondant à l'ID de VXLAN parmi toutes les VSI locales ;
la détermination, par le dispositif CP BRAS, d'information de port configurée pour la VSI trouvée comme étant l'information de port du port d'accès utilisateur correspondant à l'ID de VXLAN.

3. Procédé selon la revendication 1, dans lequel le procédé comprend en outre :
la réception (400d1), par le dispositif CP BRAS (120), d'une configuration de tunnel VXLAN, dans lequel la configuration de tunnel VXLAN est envoyée par l'élément de réseau UCM lors de la réception d'une commande pour configurer le port d'accès utilisateur sur le dispositif DP BRAS (110) afin d'habiliter un service BRAS,
l'établissement (400d2), par le dispositif CP BRAS, du tunnel VXLAN sur la base de la configuration de tunnel VXLAN ;
la réception (400d3), par le dispositif CP BRAS, d'une deuxième instruction de création de VSI envoyée par l'élément de réseau UCM, dans lequel la deuxième instruction de création de VSI est utilisée pour commander au dispositif CP BRAS de créer une VSI correspondant à l'ID de VXLAN,
la création (400d4), par le dispositif CP BRAS, d'une VSI correspondant à l'ID de VXLAN localement, sur la base de la deuxième instruction de création de VSI.

4. Procédé selon la revendication 1, dans lequel l'information de port comprend :
un numéro de sous-rainure d'une sous-rainure où se trouve le port d'accès utilisateur,
un numéro de rainure auquel correspond le numéro de sous-rainure,
un numéro de port du port d'accès utilisateur,
le type du port d'accès utilisateur.

5. Procédé d'authentification, comprenant :
la réception (301), par un dispositif DP BRAS (110) dans l'architecture BRAS avec des transfert et contrôle de données séparés, d'un paquet de contrôle via un port d'accès utilisateur local, dans lequel le paquet de contrôle est utilisé pour authentifier un utilisateur et est envoyé par un équipement utilisateur ;
la détermination (302), par le dispositif DP BRAS, d'un ID de VXLAN correspondant au port d'accès utilisateur ;
la mise en œuvre (303), par le dispositif DP BRAS, d'une encapsulation VXLAN sur le paquet de contrôle sur la base de l'ID de VXLAN et d'un tunnel VXLAN associé à l'ID de VXLAN, dans lequel l'ID de VXLAN est transporté dans l'encapsulation VXLAN ;
l'envoi (304), par le dispositif DP BRAS, du paquet de contrôle encapsulé par VXLAN via le tunnel VXLAN à un dispositif CP BRAS à une extrémité opposée du tunnel VXLAN,
dans lequel la détermination de l'ID de VXLAN correspondant au port d'accès utilisateur comprend :
la détermination (302a1), par le dispositif DP BRAS (110), d'une VSI associée au port d'accès utilisateur ;
la détermination (302a2), par le dispositif DP BRAS, d'un ID de VXLAN correspondant à la VSI comme étant l'ID de VXLAN correspondant au port d'accès utilisateur.

6. Procédé selon la revendication 5, dans lequel le procédé comprend en outre :
la réception (300b1), par le dispositif DP BRAS (110), d'une configuration de tunnel VXLAN et d'une première instruction de création de VSI, dans lequel la configuration de tunnel VXLAN et la première instruction de création de VSI sont envoyées par un élément de réseau UCM lors de la réception d'une commande pour configurer le port d'accès utilisateur afin d'habiliter un service BRAS, et dans lequel la première instruction de création de VSI est utilisée pour commander au dispositif DP BRAS de créer une VSI qui est associée au port d'accès utilisateur et qui correspond à l'ID de VXLAN ;
l'établissement (300d2), par le dispositif DP BRAS, du tunnel VXLAN sur la base de la configuration de tunnel VXLAN ;
la création (300b3), par le dispositif DP BRAS, de la VSI sur la base de la première instruction de création de VSI.

7. Procédé selon la revendication 5, dans lequel le procédé comprend en outre :
l'envoi, par le dispositif DP BRAS (110), de l'information de port du port d'accès utilisateur à l'élément de réseau UCM, de telle sorte que l'élément de réseau UCM envoie l'information de port du port d'accès utilisateur correspondant à l'ID de VXLAN au dispositif CP BRAS (120).

8. Procédé selon la revendication 7, dans lequel l'information de port du port d'accès utilisateur comprend :
un numéro de sous-rainure d'une sous-rainure où se trouve le port d'accès utilisateur,
un numéro de rainure auquel correspond le numéro de sous-rainure,
un numéro de port du port d'accès utilisateur,
le type du port d'accès utilisateur.

9. Dispositif d'authentification appliqué à un dispositif (120) de plan de contrôle, CP, de serveur haut débit à accès distant, BRAS, dans une architecture BRAS avec des transfert et contrôle de données séparés, comprenant :
un module de réception (601), configuré pour recevoir (401) un paquet de contrôle avec une encapsulation VXLAN via un tunnel VXLAN avec le dispositif DP BRAS dans l'architecture BRAS ;
un module de traitement (602), configuré pour, quand il est déterminé que le paquet de contrôle est un paquet utilisé pour l'authentification d'un utilisateur,
chercher (403), sur le dispositif CP BRAS, de l'information de port du port d'accès utilisateur correspondant à un ID de VXLAN dans l'encapsulation VXLAN, dans lequel le port d'accès utilisateur réside sur le dispositif DP BRAS ;
envoyer (404) l'information de port et l'information d'identité de l'utilisateur transportées dans le paquet de contrôle à un serveur d'authentification pour leur authentification,
dans lequel le module de traitement (602) est en outre configuré pour :
recevoir l'information de port envoyée par un élément de réseau UCM,
configurer l'information de port sur une VSI correspondant à l'ID de VXLAN créé par le dispositif CP BRAS.

10. Dispositif selon la revendication 9, dans lequel le module de traitement (602) est configuré pour chercher, sur le dispositif CP BRAS (120), l'information de port correspondant à l'ID de VXLAN, par :
la recherche d'une VSI correspondant à l'ID de VXLAN parmi toutes les VSI sur le dispositif CP BRAS ;
la détermination de l'information de port configurée pour la VSI trouvée comme étant l'information de port correspondant à l'ID de VXLAN.

11. Dispositif d'authentification appliqué à un dispositif (110) de plan de données, DP, de serveur haut débit à accès distant, BRAS, dans une architecture BRAS avec des transfert et contrôle de données séparés, comprenant :
un module de port d'utilisateur (801) configuré pour recevoir (301) un paquet de contrôle via un port d'accès utilisateur sur le dispositif DP BRAS, dans lequel le paquet de contrôle est utilisé pour authentifier un utilisateur et est envoyé par un équipement utilisateur, et configuré pour déterminer (302) un ID de VXLAN correspondant au port d'accès utilisateur ;
un module d'envoi (802) configuré pour mettre en œuvre (303) une encapsulation VXLAN sur le paquet de contrôle sur la base de l'ID de VXLAN et d'un tunnel VXLAN associé à l'ID de VXLAN, et pour envoyer (304) le paquet de contrôle encapsulé sur VXLAN via le tunnel VXLAN à un dispositif CP BRAS à une extrémité opposée du tunnel VXLAN, dans lequel l'ID de VXLAN est transporté dans l'encapsulation VXLAN,
dans lequel le module de port d'utilisateur (801) est en outre configuré pour déterminer, via le dispositif DP BRAS (110), une VSI associée au port d'accès utilisateur et pour déterminer un ID de VXLAN correspondant à la VSI comme étant l'ID de VXLAN correspondant au port d'accès utilisateur.

12. Dispositif selon la revendication 11, dans lequel le dispositif comprend en outre un module de création (803), le module de création étant configuré pour :
recevoir (300b1) une configuration de tunnel VXLAN et une première instruction de création de VSI, dans lequel la configuration de tunnel VXLAN et la première instruction de création de VSI sont envoyées par un élément de réseau UCM, lors de la réception d'une commande pour configurer le port d'accès utilisateur afin d'habiliter un service BRAS, et dans lequel la première instruction de création de VSI est utilisée pour commander au dispositif DP BRAS de créer une VSI qui est associée au port d'accès utilisateur et qui correspond à l'ID de VXLAN ;
établir (300b2) le tunnel VXLAN sur la base de la configuration de tunnel VXLAN ;
créer (300b3) la VSI sur la base de la première instruction de création de VSI.
